(19) Europäisches Patentamt
European Patent Office
Office européen des brevets

(11) EP 1 179 633 B1

(12) EUROPEAN PATENT SPECIFICATION

(45) Date of publication and mention of the grant of the patent:
**08.09.2004 Bulletin 2004/37**

(21) Application number: **01112566.3**

(22) Date of filing: **23.05.2001**

(51) Int Cl.$^7$: **D21H 19/32**, D21H 17/59, D21H 17/13, D21H 19/16, D06M 11/01, D06M 15/643, D06M 13/513, C09D 183/04, C08L 83/00

(54) **Coated fiber material and coating solution used therefor**

Beschichtetes Fasermaterial sowie Beschichtungslösung zur dessen Herstellung

Matière fibreuse revêtue et solution d'enduction pour sa fabrication

(84) Designated Contracting States:
**DE FR GB**

(30) Priority: **10.08.2000 JP 2000242269**

(43) Date of publication of application:
**13.02.2002 Bulletin 2002/07**

(73) Proprietor: **Kazari-Ichi Co., Ltd.
Yokohama, Kanagawa (JP)**

(72) Inventors:
- **Iwamiya, Yoko, c/o Kazari-Ichi Co. Ltd.
Yokohama, Kanagawa (JP)**
- **Yagi, Osamu, c/o Kazari-Ichi Co. Ltd.
Yokohama, Kanagawa (JP)**

(74) Representative:
**Leson, Thomas Johannes Alois, Dipl.-Ing.
Tiedtke-Bühling-Kinne & Partner GbR,
TBK-Patent,
Bavariaring 4
80336 München (DE)**

(56) References cited:
**EP-A- 0 058 493**
**EP-A- 0 347 154**
**EP-A- 0 579 453**
**US-A- 4 046 930**
**US-A- 4 568 718**
**US-A- 5 026 813**
**US-A- 5 120 581**
**US-A- 5 552 223**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 179 633 B1

## Description

BACKGROUND OF THE INVENTION

1. Field of the Invention

The present invention relates to a coated material which gives an appropriate strength, a good light transmission, good water repelling property and softness and a flame retarding property to a paper material such as Japanese paper and western paper or a cloth material such as nonwoven fabric and cloth (hereinafter, all of them will be inclusively referred to as "fiber material" ) and also to a coating solution used therefor.

2. Description of the Related Art

Essentially, any paper material has no light transmitting property except paraffin paper, cellophane paper, etc. and, in addition, such a material is weak to water because of the fact that it is paper. Thus, paper having a light transmitting property which has been known already has a poor water repelling property. If the material is not limited to paper, materials having a light transmitting property and a water repelling property are available and they are prepared, for example, by spreading a plastic material or a vinyl material into a sheet form.

In addition, a paper material is much used for houses and dwellings. For example, with regard to a *shoji* (a paper sliding door) used as a partition for Japanese rooms, there have been used a Japanese *shoji* paper, rayon *shoji* paper manufactured by compounding pulp with rayon, polypropylene, etc. in a predetermined ratio, a *shoji* paper manufactured by subjecting the rayon *shoji* paper to a laminating treatment with a plastic film, and a *shoji* paper manufactured by subjecting the surface of Japanese paper to a laminating treatment with an acrylate material or a vinyl chloride material.

However, paper having an excellent light transmitting property such as paraffin paper and cellophane paper has, first of all, a high hygroscopicity to water having no excellent strength.

On the other hand, although a plastic sheet, a vinyl sheet, etc. having a high light transmitting property and an excellent water repelling property are able to give higher light transmitting property and better water repelling property as compared with paper, their manufacture is to be carried out by means of a factory production and it is not possible to easily manufacture a substance having a good light transmitting property and an excellent water repelling property from the materials which are ready at hand.

In addition, in houses and in public facilities such as hotels and inns in recent years, a tough rayon *shoji* paper is used and there is a disadvantage in the rayon *shoji* paper that static electricity is apt to be generated and dust is apt to adhered thereto. Since the rayon *shoji* paper is relatively resistant to water, it can be cleaned by wiping with wet cloth although there is a problem that, since it absorbs water when washed, the adhered part is detached.

In order to solve the problems as mentioned above, a surface coating by means of the so-called sol-gel method has been carried out. Usually, a sol-gel liquid used here is that where tetraalkoxysilane is a main chain and an organic substituent is introduced thereinto with an object of giving a water repelling property. In that case, the tetraalkoxysilane which is a main chain has a strong inorganic property and, therefore, it is necessary to use the so-called silane coupling agent represented by a phenyl alkoxysilane for the introduction of an organic substituent. However, the so-called silane coupling agent is expensive and, moreover, its effect is not achieved until a certain amount is used. Unfortunately, since there is a significant difference in the hydrolyzing speeds between a silane coupling agent and a tetraalkoxysilane as the main chain (where the tetraalkoxysilane is quicker), there is a problem that, when a silane coupling agent is used in a large amount, the reaction is apt to occur unevenly and the strength of the resulting coated layer significantly lowers.

For solving such a problem, the so-called organic-inorganic hybrid material where an organic substituent is directly introduced into a silicon atom has been synthesized and used. Although the above object can be well achieved by the organic-inorganic hybrid material, its synthesis is difficult whereby there is a disadvantage that it is an expensive material.

In order to solve the above problem, the present applicant also proposed a coated paper, etc. where a certain compounded solution (coating solution) containing boron ion and halogen ion as catalysts necessary for hardening the sol-gel liquid is applied to paper, nonwoven fabric, etc. so that a good water repelling property, etc. are given to such a material (Japanese Patent No. 3020934). However, in the case of the said coated paper, etc., neutralization of the paper takes place and that is not always suitable for a long-term preservation of paper since halogen ion is contained in the coating solution.

In addition, in the case of the coated paper, etc. mentioned in the Japanese Patent No. 3020934, the coated layer is only composed of a network where all of four bonds of silicon atom are in a hard siloxane bond. There is another problem that, although the surface of the coated paper is as hard as ceramics, it is fragile as well whereby, when a

fiber material such as paper having softness is coated by that, the softness of the fiber material is lost.

U.S. patent No. 5,552,223 discloses an organopolysiloxane-modified polyester as well as a method for the preparation thereof. The compositions disclosed in said U.S. patent No. 5,552,223 are cured at room temperature in the presence of a condensation reaction accelerating catalyst.

## SUMMARY OF THE INVENTION

In view of such properties of the fiber material, etc., an object of the present invention is to provide a coated material having an appropriate strength, a good light transmitting property and a good water repelling property by applying to a fiber material ready at hand such as Japanese paper, western paper, cloth, etc. and also to provide a coating solution used for the coated material.

The invention of claim 1 of the present application conducted for achieving the above object is a coated material, characterized in that, a surface is formed by applying a coating solution of a silane type mainly comprising a compound represented by the formula 1 to a fiber material which is hardened/solidified by the action of a hydrolyzable organometallic compound catalyst.

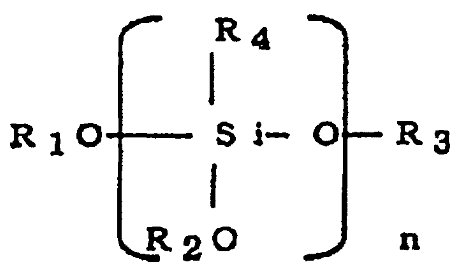

(1)

(in the formula 1, $R_1$, $R_2$, $R_3$ and $R_4$ may be same or different and each is hydrogen or an alkyl group having 1-4 carbon (s) with n ranging from 2 to 10).

The invention of claim 2 of the present application relates to the invention of the above claim 1 and is the coated material according to claim 1, wherein the surface is formed where, prior to the application of the coating solution, the said fiber material is dipped in alcohol and dried and ultraviolet ray is further irradiated thereto. The invention of claim 3 of the present application relates to the invention of the above claim 1 or 2 and is the coated material according to claim 1 or 2, wherein said hydrolyzable organometallic compound is one or more organometallic compound(s) selected from a group consisting of titanium, zirconium, aluminum and tin.

The invention of claim 4 of the present application relates to the invention of the above claim 1 and is the coated material according to claim 1, wherein said coating solution of a silane type further contains, in addition to the above-mentioned main component, a compound represented by the formula 2 having three hydrolyzable substituents and one unhydrolyzable substituent.

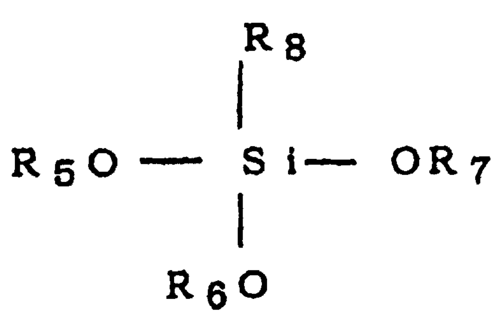

(2)

(in the formula 2, $R_5$, $R_6$ and $R_7$ may be same or different and each is a monomer comprising hydrogen, an alkyl group or an alkenyl group; a bond of $R_5O$, $R_6O$ and $R_7O$ to Si is an oligomer comprising a siloxane bond; and $R_8$ is an alkenyl group or a phenyl group which may contain en epoxy group or a glycidyl group in a molecule)

The invention of claim 5 of the present application relates to the invention of the above claim 1 and is the coated material according to claim 1, wherein said coating solution of a silane type further contains, in addition to the above-mentioned main component, a compound represented by the formula 3 having two hydrolyzable substituents

and two unhydrolyzable substituents.

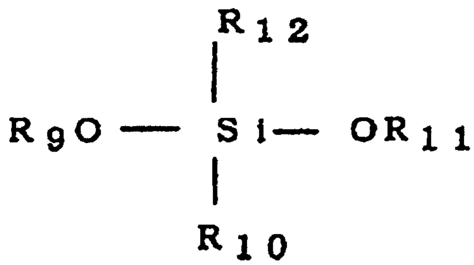

(3)

(in the formula 3, $R_9$ and $R_{11}$ may be same or different and each is a monomer comprising hydrogen, an alkyl group or an alkenyl group; a bond of $R_9O$ and $R_{11}O$ to Si is an oligomer comprising a siloxane bond; and $R_{10}$ and $R_{12}$ each is an alkyl group, an alkenyl group or a phenyl group which may contain en epoxy group or a glycidyl group in a molecule)

The invention of claim 6 of the present application is the coated material according to claim 1, wherein said coating solution of a silane type further contains, in addition to the above-mentioned main component, the compound represented by the formula 2 and the compound represented by the formula 3.

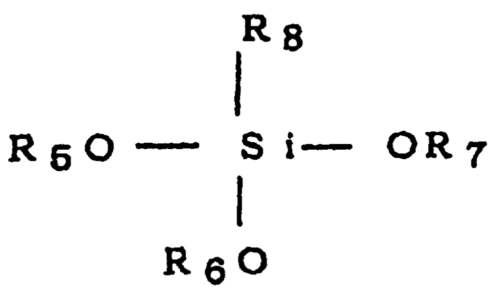

(2)

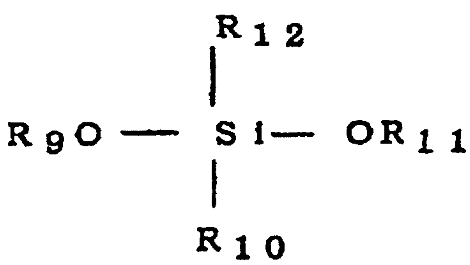

(3)

(in the formula 2 $R_5$, $R_6$ and $R_7$ may be same or different and each is a monomer comprising hydrogen, an alkyl group or an alkenyl group; a bond of $R_5O$, $R_6O$ and $R_7O$ to Si is an oligomer comprising a siloxane bond; and $R_8$ is an alkyl group, an alkenyl group or a phenyl group which may contain en epoxy group or a glycidyl group in a molecule; and in the formula 3, $R_9$ and $R_{11}$ may be same or different and each is a monomer comprising hydrogen, an alkyl group or an alkenyl group; a bond of $R_9O$ and $R_{11}O$ to Si is an oligomer comprising a siloxane bond; and $R_{10}$ and $R_{12}$ each is an alkyl group, an alkenyl group or a phenyl group which may contain en epoxy group or a glycidyl group in a molecule)

The invention of claim 7 of the present application is a coating solution of a silane type for giving an appropriate strength and good light transmitting and water repelling properties to a fiber material where the said coating solution contains as a main component a compound represented by the above formula 1 and a hydrolyzable organometallic compound catalyst for hardening/solidifying thereof. The invention of claim 8 of the present application relates to the invention of claim 7, wherein the hydrolyzable organometallic compound is one or more organometallic compound (s) selected from the group consisting of titanium, zirconium, aluminum and tin.

The invention of claim 9 of the present application relates to the invention of the claim 7, wherein the coating solution of a silane type contains a compound represented by the formula 2 having three hydrolyzable substituents and one unhydrolyzable substituent in addition to the above main component. The invention of claim 10 of the present

application relates to the invention of the claim 7, wherein the coating solution of a silane type contains a compound represented by the formula 3 having two hydrolyzable substituents and two unhydrolyzable substituents in addition to the above main component.

The invention of claim 11 of the present application relates to the invention of the claim 7, wherein the coating solution of a silane type contains the compound represented by the above-mentioned formula 2 and the compound represented by the above-mentioned formula 3 in addition to the above main component. The present invention will now be illustrated in detail as hereunder.

BRIEF DESCRIPTION OF THE DRAWING

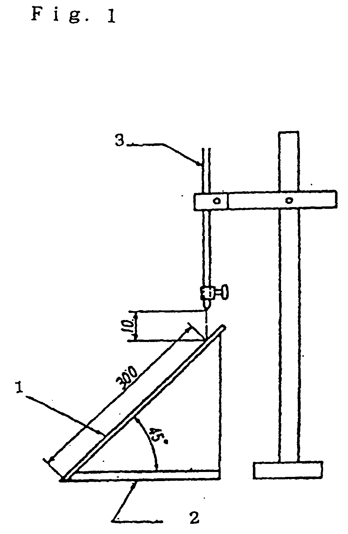

Fig. 1 is to illustrate the testing apparatus used for the evaluation of the water repelling property.

DETAILED DESCRIPTION OF PREFERRED EMBODIMENTS

In the present invention, a fiber material is coated with a compound where, as shown in the formula 1, a repeating unit in which one of four substituents of silicon atom is substituted with an unhydrolyzable substituent is contained whereby the problems in the prior art is solved. As compared with the conventionally used compounds, the compound of the formula 1 has less one strong siloxane bond between the adjacent silicon atom and such an unreacted bond according thereto remains in the so-called unsettled state whereby the softness of the coated layer can be retained and, as a result, the softness of the coated material can be retained.

In addition, since $R_4$ in the formula 1 is not hydrolyzed even when the compound of the formula 1 is hydrolyzed and polycondensed later, an organic property is given to the manufactured coated layer and, as a result, an organic property or, in other words, a water repelling property is given to the coated material.

As such, as compared with tetraalkoxysilane which is less expensive but has a strong inorganic property, the material (monomer) for preparing the compound of the formula 1 can be purchased at a low cost in the similar degree to the above. Accordingly, when the compound of the formula 1 is used, it is now possible to manufacture a coated material having a layer having a sufficient organic property and also a sufficient strength even if the expensive silane coupling agent is not used together. As such, the invention of the present application is inter alia characteristic in using the compound represented by the formula 1 for achieving the above-mentioned object.

In the invention of the present application, a fiber material represented by a paper material such as Japanese paper and western paper and a cloth material such as nonwoven fabric and cloth is applied with a coating solution mainly comprising a compound represented by the formula 1 and the solution is hardened and solidified by the action of a hydrolyzable organometallic compound catalyst. $R_1$, $R_2$ and $R_3$ in the formula 1 may be same or different and each is hydrogen or an alkyl group having 1-4 carbon(s) while n is 2-10.

Such a compound may be manufactured by a condensation of a monomer (such as methyltrimethoxysilane). The reason why the repetition (n) of the main chain is 2-10 is that, if a monomer (n=1) is used, the polymerization thereof is time-consuming and it is difficult to manufacture a coated layer having a sufficient strength within a short time. On the other hand, when n is 11 or more, numbers of a alkoxy group, etc. for polymerization on the fiber material after applying on the fiber material are insufficient whereby it is difficult to manufacture a coated membrane having a sufficient strength. Accordingly, the substance in the invention of the present application is a condensate where n is 2-10 or, particularly preferable, n is 2-8.

Generally speaking, in the synthesis of a condensate of the formula 1 from a monomer, it is substantially impossible from a technical viewpoint to correctly control its degree of polymerization. Accordingly, the use of a substance where n is 2-10 or, preferably, n is 2-8 in the invention of the present application means that a coating solution which mainly comprises the substance where n is 2-10 or, preferably, 2-8 in view of distribution of degree of polymerization is used and, therefore, there is no problem even if a substance where n is 11 or more, for example, is contained therein.

Specific examples of the compound represented by the formula 1 are condensates such as methyltrimethoxysilane, ethyltrimethoxysilane, propyltrimethoxysilane, butyltrimethoxysilane, methyltriethoxysilane, ethyltriethoxysilane, propyltriethoxysilane, butyltriethoxysilane, methyltripropoxysilane and ethyltripropoxysilane. Incidentally, the compound of the formula 1 may be a condensate of only one kind of such a monomer or may be a condensate of two or more of the above-exemplified monomers.

The primitive role of the unhydrolyzable substituent ($R_4$) in the compound of the formula 1 is to give a softness to a coated layer and, if a water repelling property is to be given to the coated layer as well, $R_4$ is an alkyl group. Generally, in an organic substituent, the more the carbon numbers, the more the organic property or the water repelling property but, when the carbon numbers are too much, strain is resulted in the coated layer due to a steric hindrance causing a deterioration in the layer strength. Accordingly, it is preferred to decide the carbon numbers of the alkyl group and also the type and the quantity of each monomer constituting the compound (condonsate) of the formula 1 by

carrying out a preliminary manufacturing test, etc. by referring to the Examples, etc. of the specification of the present application. Incidentally, it is also possible to give a water repelling property to the coated layer by adding a compound of the formula 2 or 3 which will be mentioned later and, therefore, it is not essential that $R_4$ in the compound of the formula 1 is an alkyl group.

With regard to a catalyst for hardening and solidifying the compound of the formula 1, several commonly-used catalysts may be considered. When a common catalyst is used, water of reaction is made to coexist for hardening/solidifying the compound of the formula 1.

However, when a coating solution containing a compound of the formula 1, a catalyst and water of reaction is preserved for a long term, there is a problem that the coating solution is apt to become a gel due to the water of reaction. In order to solve that, it is necessary to use a hydrolyzable organometallic compound as a catalyst instead of the above-mentioned conventional catalyst. When the hydrolyzable organometallic compound is used, the coexistence of the water of reaction is not necessary and that is favorable in view of stability for a long-term preservation.

When an organometallic compound is mixed with a compound of the formula 1 and the resulting coating solution is applied to a fiber material such as paper, it absorbs moisture on the paper or moisture (damp) in the air and the organometallic compound hydrolyses by itself. At that time, a network is formed with the compound of the formula 1 whereby the compound of the formula 1 is hardened/solidified. Examples of the organometallic compound which is used in the invention of the present application are those containing titanium, zirconium, aluminum or tin. To be more specific, tetrapropoxy titanate, tetrabutoxy titanate, tetrapropoxy zirconate, tetrabutoxy zirconate, tripropoxy aluminate, aluminum acetylacetonate, dibutyltin diacetate and dibutyltin dilaurate.

Further, an organic solvent may be added to the coating solution of the invention of the present application so that the compound of the formula 1, the hydrolyzable organometallic compound catalyst and water of reaction which is needed in some cases are homogeneously mixed. Examples of the organic solvent used for such an object are alcohol compounds. To be more specific, methanol, ethanol, propanol, isopropanol, butanol, pentanol and hexanol may be exemplified. It is also possible to adjust the viscosity and the drying speed of the coating solution by controlling its adding amount.

With an object of such a control, it is particularly preferred to use an organic solvent having high viscosity and boiling point such as glycols (for example, ethylene glycol, propylene glycol, diethylene glycol, polyethylene glycol, dipropylene glycol and polypropylene glycol) and cellosolves (for example, methoxyethanol, propoxyethanol, butoxyethanol, methoxypropanol, ethoxypropanol, propoxypropanol and butoxypropanol) either solely or jointly. It goes without saying that the already-mentioned alcohol may be added together with the above-mentioned one or more organic solvent(s) having high viscosity and boiling point. When an object is to adjust the viscosity and the drying speed of the coating solution, the same effect can be achieved not only by the above-mentioned organic solvent but also by a surface-active agent.

Especially in the case of the above-mentioned glycols and cellosolves, they have hydroxyl groups in a molecule and, therefore, they may be introduced into a network of the siloxane bond formed by the condensation reaction of the compound of the formula 1. Since glycols and cellosolvs have an organic property, there is an increase in the organic property of the resulting coated layer or, in other words, there is an increase in the organic property of the coated material as a result of such an introduction.

In the method for the manufacture of a coated material according to the invention of the present application, a fiber material is cut at first, then processed in an optional size and shape and applied with the above-mentioned coating solution of the invention of the present application. With regard to a specific method of application, there is no particular limitation and it may be carried out, for example, by dipping a fiber material in a coating solution, by applying a coating solution to a fiber material or by spraying a coating solution to a fiber material.

In the invention of the present application, a coated material can be manufactured using, for example, a product prepared by making the fiber of a bark into paper followed by drying, a high-class hand-made Japanese paper, an ordinary Japanese paper, western paper or *yuzen* paper (Japanese printed paper) manufactured by a machine, fiber made from nonwoven fabric or an ordinary cloth as a fiber material. When a fiber material is subjected to a certain pretreatment before applying a coating solution, bonding of the fiber material surface to the coated layer can be made reinforced as compared with that which is not subjected to the said pretreatment.

An example of such a pretreatment is that a fiber material is dipped for about 30 minutes in isopropyl alcohol having a purity of as high as about 98%, then allowed to stand at a high temperature of about 100°C to completely dry and, after that, irradiated with ultraviolet ray for about 30 minutes.

When a coating solution is applied to a fiber material which is or is not subjected to the certain pretreatment as mentioned above, the compound of the formula 1 is hydrolyzed and a siloxane bond (Si-O-Si) is formed via a reaction as shown in (1) to (3) of the following reaction formulae 1.

Reaction Formulae 1:

(1) $Si\text{-}OR + H_2O \rightarrow Si\text{-}OH + ROH$

(2) $Si\text{-}OH + HO\text{-}Si \rightarrow Si\text{-}O\text{-}Si + H_2O$

(3) $Si\text{-}OH + RO\text{-}Si \rightarrow Si\text{-}O\text{-}Si + ROH$

The bonding energy of Si-O in the resulting siloxane bond (Si-O-Si) as such is 106 kcal/mol while the bonding energy of C-C bond which is a typical bond in organic compounds is 82.6 kcal/mol. It is therefore understood that the coated layer of a glassy quality having a siloxane bond produced by hydrolysis of a compound of the formula 1 has far more thermally stable bond as compared with organic compounds. Due to the said thermally stable bond, the coated layer which is formed by the invention of the present application becomes excellent in terms of heat resistance and abrasion resistance and, as a result, it is possible to manufacture a coated material having excellent resistance to heat and to abrasion.

Because the coating solution of the invention of the present application contains the above-mentioned organometallic compound (such as tetrabutoxy titanium) as a catalyst, the reactions of (1) to (3) in the above reaction formulae 1 proceed even when water of reaction is not contained in the coating solution and, to be more precise, the reaction at that time is as shown in (4) and (5) in the following reaction formulae 2.

Reaction Formulae 2:

(4) $Ti\text{-}OR + H_2O \rightarrow Ti\text{-}OH + ROH$

(5) $Ti\text{-}OH + RO\text{-}Si \rightarrow Ti\text{-}O\text{-}Si$

As a result of introduction of the Ti-O bond into the coated layer as mentioned above, resistance to heat and to abrasion can be further improved as compared with a coated layer solely comprising a siloxane bond. Because an organometallic compound is used as a catalyst as such, it is not necessary that water of reaction is made to coexist and, in addition, resistance of the coated layer to heat and to abrasion can be further improved whereby resistance of the coated material to heat and to abrasion can be far stronger.

In the invention of the present application, preferably a coating solution containing a compound of the formula 2 in addition to the compound of the formula 1 is used and, as a result, it is possible to newly add a property of the compound of the formula 2 such as an organic property or to potentiate a property such as an organic property as compared with the coated material manufactured without the use of the above-mentioned coating solution. The compound of the formula 2 which is added with such an object is a compound where three of the four substituents are hydrolyzable while the remaining one is an unhydrolyzable substituent.

In the formula 2, $R_5$, $R_6$ and $R_7$ may be same or different and each is a monomer comprising hydrogen or an alkyl or alkenyl group having 1-10 carbon(s); a bond of $R_5O$, $R_6O$ and $R_7O$ with Si is an oligomer comprising a siloxane bond; and $R_8$ is an alkyl or alkenyl group having 1-10 carbon(s) or a phenyl group which may contain an epoxy group or a glycidyl group in its molecule.

Specific examples of the compound of the formula 2 are vinyltrimethoxysilane, phenyltrimethoxysilane, γ-(methacryloxypropyl)trimethoxysilane, γ-glycidoxypropyltrimethoxysilane, aminopropyltrimethoxysilane, β-(3,4-epoxycyclohexyl)ethyltrimethoxysilane, vinyltriethoxysilane, phenyltriethoxysilane, γ-(methacryloxypropyl)triethoxysilane, γ-glycidoxypropyltriethoxysilane, aminopropyltriethoxysilane and vinyltris(β-methoxyethoxy)silane as well as condensates of about 2 to 10 molecules thereof.

Incidentally, the compound of the formula 2 may be two or more kinds of such monomers. When a condensate of two or more molecules is used as the compound of the formula 2, that may be a condensate of two or more of such monomers.

It is also possible in the invention of the present application that a coating solution to which a compound of the formula 3 is further added is used in addition to a coating solution containing a compound of the formula 1 or a coating solution containing both compounds of the formulae 1 and 2 whereby a property of the compound of the formula 3 such as an organic property is newly given or a property such as an organic property is potentiated as compared with a coated material which is manufactured without the use of it.

The compound of the formula 3 is a compound where, among the four substituents, two are hydrolyzable substituents while other two are unhydrolyzable substituents. In the formula 3, $R_9$ and $R_{11}$ may be same or different and each is a monomer comprising a hydrogen atom or an alkyl or alkenyl group having 1-10 carbon(s); bond of $R_9O$ and $R_{11}O$ with Si is an oligomer comprising a siloxane bond; and $R_{10}$ and $R_{12}$ each is an alkyl or alkenyl group having

1-10 carbon(s) or a phenyl group having an epoxy group or a glycidyl group in its molecule.

Specific examples of the compound represented by the formula 3 are dimethyldimethoxysilane, dimethyldiethoxysilane, diethyldimethoxysilane, diethyldiethoxysilane, diphenyldimethoxysilane, diphenyldiethoxysilane, methylvinyldimethoxysilane and methylvinyldiethoxysilane as well as condensates comprising about 2-10 molecules thereof. Incidentally, the compound of the formula 3 may be two or more kinds of such monomers. When a condensate of two or more molecules is used as the compound of the formula 3, that may be a condensate of two or more of such monomers.

When any of the compounds of the formula 2 and formula 3 as mentioned above is added to a coating solution, it is possible to increase an organic property of the coating solution while, when both compounds of the formulae 2 and 3 are added to the coating solution, the organic property of the coated layer can be further improved and, as a result, a water repelling property, etc. of the coated material can be further improved as well.

It is preferred that, in general, the compound of the formula 2 and/or the compound of the formula 3 are/is added to the coating solution in such an amount that the total amount does not exceed 50% of the compound of the formula 1 which is the main component of the coating solution. When the total adding amount exceeds that range, bonding with the compound of the formula 1 which is the main component does not well take place when the coating solution is applied to a fiber material whereby there is possibility that the strength of the coated layer is insufficient. Accordingly, in the case of actual addition of the compound of the formula 2 and/or the compound of the formula 3, it is recommended that, taking the fact that the strength of the coated layer lowers depending upon the adding amount into consideration, the addition is kept minimum after elucidating the adding amount by which the object can be achieved as a result of a preliminary manufacturing test, etc. by referring to the Examples of the specification of the present application.

The primary role of the unhydrolyzable substituents ($R_8$, $R_{10}$ and $R_{12}$) in the compound of the formula 2 and the compound of the formula 3 is to give softness to the coated layer and, since they are organic substituents such as an alkyl group, they also play a role of giving a water repelling property to the coated layer. Generally, in the organic substituents, the more the carbon numbers, the more the organic property or the water repelling property while, when the carbon numbers are too many, a strain is resulted in the coated layer due to a steric hindrance causing a lowering of the strength of the layer. Accordingly, it is recommended that the carbon numbers of the organic substituent and the type and the quantity of each of the monomers constituting the compound of the formula 2 and/or the compound of the formula 3 (condensate) are elucidated after carrying out a preliminary manufacturing test, etc. by referring to the Examples, etc. of the specification of the present application.

A siloxane bond which has a strong resistance to heat and to abrasion is, on the other hand, the so-called "hard" bond as well. Due to the said "hardness", it is possible to give a resistance to abrasion to a fiber material such as paper upon application to the said material. However, a fiber material such as paper is characteristic by its softness and a coated material is sometimes requested to have the softness as same as paper, etc. which is a material therefor.

In a sol-gel coating solution which has been commonly used already, tetraalkoxysilane ($Si(OR)_4$) or an oligomer thereof is used as a starting material. When a coated layer is formed by its complete hydrolysis reaction ((1) to (3) in the already-mentioned formula 1), all of the four bonds of silicon atom form a network of a hard siloxane bond giving a layer which is as hard as ceramics but is fragile without softness and, therefore, it has been practically impossible to manufacture a coated material where the softness of paper, etc. is well utilized.

. According to the invention of the present application however, a compound of the formula 1 where one of the four substituents for silicon atom is not hydrolyzable is used as a main component of the coating solution whereby the above problem is solved. Moreover, according to the invention of the present application, a compound of the formula 2 and the compound of the formula 3 having one and two unhydrolyzable substituent(s) respectively are preferably added to the coating solution whereby it is possible to further increase the softness, etc.

## DETAILED DESCRIPTION OF PREFERRED EMBODIMENTS

The invention of the present application will now be further illustrated by way of the following Examples although those Examples are just examples and they are not intended to limit the invention of the present application.

### Example 1. Manufacture of Alkoxysilane Condensates.

A methyltrimethoxysilane condensate (MTM), an ethyltrimethoxysilane condensate (ETM) and a methyltriethoxysilane condensate (MTE) were synthesized as follows.

(1) Synthesis of MTM.

To a 500-ml three-necked flask were added 181 g of methyltrimethoxysilane, 50 g of methanol and 18 g of

pure water followed by well stirring. Then 2 g of 61% nitric acid were added, the mixture was heated to reflux for 3 hours with stirring and, after completion of the reaction, methanol was removed by making the inner part of the reactor vacuum with heating. The MTM prepared as such is mainly composed of trimer to tetramer according to a gas chromatographic analysis.

(2) Synthesis of ETM.

To a 500-ml three-necked flask were added 200 g of ethyltrimethoxysilane, 50 g of methanol and 18 g of pure water followed by well stirring. Then 2 g of 61% nitric acid were added, the mixture was heated to reflux for 7 hours with stirring and, after completion of the reaction, methanol was removed by making the inner part of the reactor vacuum with heating. The ETM prepared as such is mainly composed of trimer to tetramer according to a gas chromatographic analysis.

(3) Synthesis of MTE.

To a 500-ml three-necked flask were added 273 g of methyltriethoxysilane, 50 g of ethanol and 18 g of pure water followed by well stirring. Then 2 g of 61% nitric acid were added, the mixture was heated to reflux for 12 hours with stirring and, after completion of the reaction, methanol was removed by making the inner part of the reactor vacuum with heating. The MTE prepared as such is mainly composed of trimer to tetramer according to a gas chromatographic analysis.

Example 2.Preparation of Coating Solution and Manufacture of Coated Material.

(1) Preparation of Coating Solution.

Alkoxysilane condensates synthesized in Example 1 were used and 17 kinds of coating solutions of the invention of the present application as shown in Table 1 containing the condensate as a main component (hereinafter, they will be referred to as the coating solution 1 to 16 and comparative coating solution 17 by citing the number given in Table 1) were prepared. For comparison, 4 kinds of coating solutions as shown in Table 2 containing methyl methoxysilane monomer as a main component (hereinafter, they will be referred to as the comparative coating solution 1 to 12 by citing the number given in Table 2) were prepared.

(2) Manufacture of Coated Material.

On June 21, 2000 in the laboratory of the applicant company of the present application (room temperature: 25°C; humidity: 70%), the applicant of the present application applied 29 kinds, in total, of the coating solutions mentioned in the above (1) to a fiber material whereupon coated materials were prepared. At first, plural *yuzen* paper sheets (Japanese paper on which a pattern is printed) were prepared as fiber materials and the said *yuzen* paper was dipped in each of the coating solutions for 30 seconds. After that, in order to prevent the deformation of the *yuzen* paper by heat, drying was started at 60°C, temperature was gradually raised up to 100°C in the final stage so that the said *yuzen* paper was completely dried whereupon the coated materials (*yuzen* paper) of the invention of the present application were manufactured.

Example 3. Evaluation of the Coated Materials (*Yuzen* Paper).

Succeeding to Example 2, the coated materials manufactured as such were subjected to evaluation tests for light transmitting property, mechanical strength, water repelling property and flame retarding property as follows. In Tables 1 and 2, each of the evaluated results was checked as a whole and given by a double circle, a single circle, a triangle or a cross which stands for very good, good, poor or very poor, respectively. With regard to the coated materials manufactured by the use of the coating solution 5 of the present application of Tables 1 and 2 and by the use of a comparative coating solution of Japanese Patent No. 3020934, each of the evaluated results is given by a double circle (better) or by a single circle (inferior) in Table 3.

With degree to a horizontal firing test, a detailed result for the coated material manufactured by the use of the coating solution 5 of the present application is shown in Table 4.

Table 1

| Coating Solution | Compound 1 | | Compound 2 or 3 | | Solvent(s) | | Catalyst | | Result |
|---|---|---|---|---|---|---|---|---|---|
| | Name | Amt (g) | Name | Amt (g) | Name(s) | Amt (g) | Name | Amt (g) | |
| 1 | MTM | 19.0 | - | - | isopropyl alcohol<br>ethylene glycol | 2.0<br>2.0 | $(BuO)_4Zr$ | 0.8 | o |
| 2 | MTM | 19.0 | - | - | isopropyl alcohol<br>ethylene glycol | 2.0<br>2.0 | $(BuO)_4Ti$ | 0.8 | o |
| 3 | MTM | 19.0 | - | - | isopropyl alcohol<br>ethylene glycol | 2.0<br>2.0 | $Bu_2Sn(AcO)_2$ | 0.8 | oo |
| 4 | MTM | 14.0 | γ-Glycidoxypropyl trimethoxysilane | 5.0 | isopropyl alcohol | 2.0 | $Bu_2Sn(AcO)_2$ | 0.8 | oo |
| 5 | MTM | 14.0 | Phenyl trimethoxysilane | 5.0 | isopropyl alcohol | 2.0 | $Bu_2Sn(AcO)_2$ | 0.8 | oo |
| 6 | ETM | 19.0 | - | - | isopropyl alcohol<br>ethylene glycol | 2.0<br>2.0 | $(BuO)_4Zr$ | 0.8 | o |
| 7 | ETM | 19.0 | - | - | isopropyl alcohol<br>ethylene glycol | 2.0<br>2.0 | $(BuO)_4Ti$ | 0.8 | o |
| 8 | ETM | 19.0 | - | - | isopropyl alcohol<br>ethylene glycol | 2.0<br>2.0 | $Bu_2Sn(AcO)_2$ | 0.8 | oo |
| 9 | ETM | 14.0 | γ-Glycidoxypropyl trimethoxysilane | 5.0 | isopropyl alcohol | 2.0 | $Bu_2Sn(AcO)_2$ | 0.8 | oo |
| 10 | ETM | 14.0 | Phenyl trimethoxysilane | 5.0 | isopropyl alcohol | 2.0 | $Bu_2Sn(AcO)_2$ | 0.8 | oo |
| 11 | MTE | 19.0 | - | - | isopropyl alcohol<br>ethylene glycol | 2.0<br>2.0 | $(BuO)_4Zr$ | 0.8 | o |
| 12 | MTE | 19.0 | - | - | isopropyl alcohol<br>ethylene glycol | 2.0<br>2.0 | $(BuO)_4Ti$ | 0.8 | o |
| 13 | MTE | 19.0 | - | - | isopropyl alcohol<br>ethylene glycol | 2.0<br>2.0 | $Bu_2Sn(AcO)_2$ | 0.8 | oo |
| 14 | MTE | 14.0 | γ-Glycidoxypropyl trimethoxysilane | 5.0 | isopropyl alcohol | 2.0 | $Bu_2Sn(AcO)_2$ | 0.8 | oo |
| 15 | MTE | 14.0 | Phenyl trimethoxysilane | 5.0 | isopropyl alcohol | 2.0 | $Bu_2Sn(AcO)_2$ | 0.8 | oo |
| 16 | MTM | 14.0 | Dimethyl dimethoxysilane | 5.0 | isopropyl alcohol | 2.0 | $Bu_2Sn(AcO)_2$ | 0.8 | oo |
| 17 * | MTM | 14.0 | Pure water | 5.0 | isopropyl alcohol | 10.0 | 61% $HNO_3$ | 0.1 | o |

BuO: butoxy AcO: acetate

* Comparative Example

Table 2

| Coating Solution | Compound 1 | | Compound 2 | | Solvent(s) | | Catalyst | | Result |
|---|---|---|---|---|---|---|---|---|---|
| | Name | Amt (g) | Name | Amt (g) | Name(s) | Amt (g) | Name | Amt (g) | |
| 1 | Methyl trimethoxysilane | 21.0 | - | - | isopropyl alcohol<br>ethylene glycol | 2.0<br>2.0 | $(BuO)_4Zr$ | 0.8 | Δ |
| 2 | Methyl trimethoxysilane | 21.0 | - | - | isopropyl alcohol<br>ethylene glycol | 2.0<br>2.0 | $(BuO)_4Ti$ | 0.8 | Δ |
| 3 | Methyl trimethoxysilane | 21.0 | - | - | isopropyl alcohol<br>ethylene glycol | 2.0<br>2.0 | $Bu_2Sn(AcO)_2$ | 0.8 | Δ |
| 4 | Methyl trimethoxysilane | 15.0 | γ-Glycidoxypropyl trimethoxysilane | 5.0 | isopropyl alcohol | 2.0 | $Bu_2Sn(AcO)_2$ | 0.8 | Δ |
| 5 | MS-51 | 19.0 | - | - | isopropyl alcohol<br>ethylene glycol | 2.0<br>2.0 | $(BuO)_4Zr$ | 0.8 | Δ |
| 6 | MS-51 | 19.0 | - | - | isopropyl alcohol<br>ethylene glycol | 2.0<br>2.0 | $(BuO)_4Ti$ | 0.8 | × |
| 7 | MS-51 | 19.0 | - | - | isopropyl alcohol<br>ethylene glycol | 2.0<br>2.0 | $Bu_2Sn(AcO)_2$ | 0.8 | × |
| 8 | MS-51 | 14.0 | γ-Glycidoxypropyl trimethoxysilane | 5.0 | isopropyl alcohol | 2.0 | $Bu_2Sn(AcO)_2$ | 0.8 | × |
| 9 | ES-40 | 19.0 | - | - | isopropyl alcohol<br>ethylene glycol | 2.0<br>2.0 | $(BuO)_4Zr$ | 0.8 | × |
| 10 | ES-40 | 19.0 | - | - | isopropyl alcohol<br>ethylene glycol | 2.0<br>2.0 | $(BuO)_4Ti$ | 0.8 | × |
| 11 | ES-40 | 19.0 | - | - | isopropyl alcohol<br>ethylene glycol | 2.0<br>2.0 | $Bu_2Sn(AcO)_2$ | 0.8 | × |
| 12 | ES-40 | 14.0 | γ-Glycidoxypropyl trimethoxysilane | 5.0 | isopropyl alcohol | 2.0 | $Bu_2Sn(AcO)_2$ | 0.8 | × |

BuO: butoxy AcO: acetate

MS-51: oligomer of tetramethoxysilane (average degree of polymerization: 3-4)

ES-40: oligomer of tetraethoxysilane (average degree of polymerization: 4-5)

Table 3

| Coating Solution | Water Repelling Property | Light Transmitting Property | Flame Retarding Property | Result |
|---|---|---|---|---|
| Coating Solution 5 of the Present Application | oo | oo | Oo | oo |
| Comparative Coating Solution (Japanese Patent No.3020934) | o | o | Oo | o |

Table 4

| Result of Horizontal Firing Test | | | | |
|---|---|---|---|---|
| | Time Until Arriving at 100 mm | | | Burning Rate (mm/min) |
| Blank | 20 | 21 | 20 | 215.8 |
| 7.5 $g/m^2$ | 38 | 40 | 37 | 112.8 |
| 15 $g/m^2$ | 56 | 54 | 50 | 81.1 |

(1) Evaluation of Light Transmitting Property.

In the evaluation of the light transmitting property, coated materials were manufactured using rubbed paper prepared by rubbing the Japanese paper, *rakusui* paper prepared by dropping water drops onto the Japanese paper, small wood chip paper prepared by assembling small chips of wood and paperboard comprising corrugated cardboard in addition to the *yuzen* paper used in Example 2 and they were subjected to the evaluation.

The evaluation was carried out by observing each of the manufactured coated materials by naked eye under illuminating with a light box from the bottom and then luster, degree of coloration, transparency, etc. were evaluated. The result was that the surface of the coated material manufactured from *yuzen* paper using a coating solution of the present application was translucent with luster since the coating solution itself was colorless and transparent whereby the color of the *yuzen* paper used as a material was dark and the white part in the *yuzen* paper was translucent with luster having a white color. On the other hand, in the case of the comparative coating solution, since the coating solution itself is yellow, the white part of the *yuzen* paper was translucent with luster having a bit yellow color.

In the case of a coated material manufactured from a rubbed paper using the coating solution of the present application, it was translucent having luster as a whole. In the case of the coated material manufactured from *rakusui* paper, the white part was also translucent with luster with a white color like the rubbed paper. In the case of the coated materials manufactured from small wood chip paper and from paperboard, they were also translucent as a whole, had increased luster and showed dark color as a whole.

From the result of the above evaluations, it was noted that, in the coated materials manufactured by the use of the coating solution of the present application, translucency with luster was given and further that the color became dark as a whole.

(2) Evaluation of Mechanical Strength.

The coated material manufactured from rubbed paper for which an evaluation for a light transmitting property was carried out was bent by hand and it was observed by naked eye whether the coated membrane was detached whereby the hardness (mechanical strength) of each of the coated layer was evaluated. In the case of the coated material manufactured by the use of the comparative coating solution, the coated layer on the surface was detached in all cases when the rubbed paper was bent. On the other hand, in the case of the coated material manufactured by the use of the coating solution of the present application, there was no case where the surface was detached even when the paper was bent.

The above result means that, in the coated layer produced by the comparative coating solution, detachment was resulted because of a low softness while the coated layer produced by the coating solution of the present application had far more softness as compared with the above showing an increase in mechanical strength as a whole. That is presumably because the main component (the compound of the formula 1) contained in the coating solution, the silane compound(s) added thereto (the compound(s) of the formula 2 and/or the formula 3), the hydrolyzable organometallic compound catalyst, etc. were hydrolyzed and polycondensed on the rubbed paper and came into very fine areas of the rubbed paper during the course of formation of the coated layer by polymerization whereupon they were mechanically entangled by a physical bonding to the paper fiber, organic moieties were hydrophobically bonded each other or hydroxyl groups of cellulose which is a main component of the paper were chemically bonded with the silane compound and, as a result, the mechanical strength increased. Chemical reaction of hydroxyl groups of cellulose with silane compound is assumed to be as follows.

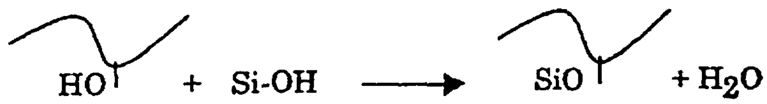

(where 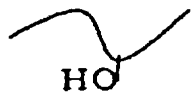 is cellulose fiber)

(3) Evaluation of Water Repelling Property.

Evaluation of a water repelling property was carried out in accordance with "Test Method for Paper and Water Repellency of Paper (JIS P 8137)". First, a test piece of not shorter than 300 mm length and 200 mm width having no fold, wrinkle, unevenness, etc. was prepared according to JIS P 8110 (Method for Preparation of Test Paper) from a coated material manufactured from *yuzen* paper and then subjected to a pretreatment according to the condition mentioned in JIS P 8111 (Pretreatment of the Test Paper).

A testing apparatus as shown in Fig. 1 was used, the above test piece was placed on a test piece installing surface 2 of 350 mm length, 200 mm width and 45° slope which was able to smoothly and flatly fix the above test piece, an end of a burette 3 containing distilled water of 20 ± 1°C was made apart 10 mm from the test piece in a vertical direction and adjusted so as to make the length of the water drop which was able to flow on the said test piece 1 about 300 mm, then one water drop was dropped from the said burette 3 and the state of the flowing was observed. The result was that, in the case of the coated material manufactured by the use of the coating solution of the present application, all water drops completely fell down and the water repellency was judged to be R10. On the other hand, in the case of the coated material manufactured by the use of the comparative coating solution, although the water repellency was judged to be R10, because of the drops having smaller particle sizes fell down more smoothly and, therefore, it was judged that the product manufactured by the use of the coating solution of the present invention was better.

(4) Evaluation of Flame Retarding Property.

(a) Horizontal Firing Test.

The coated material manufactured by the invention of the present application is used as a building material such as stained glass, cover and shade for desk lamp, protecting material for outer wall and wall paper, *shoji* paper, etc. for interior decoration. In view of the above, an evaluation was carried out whether it had a flame retarding property requested to building materials. In the flame retarding test, a horizontal firing test and a vertical firing test were carried out as follows in accordance with a UL standard [a standard regulated by the Underwriters' Laboratories organized by the U. S. Fire Insurance Committee concerning fire prevention, electric safety, theft prevention, etc. and an UL-listed label is given to a product which meets with requirements of the UL standard].

In carrying out the firing test, "7.5 $g/m^2$" where 7.5 g of a coating solution were impregnated per $m^2$ of *yuzen* paper and "15 $g/m^2$" where 15 g of a coating solution were impregnated per $m^2$ of *yuzen* paper were manufactured in a method as shown in the above Example 2 and they were cut in a size of 125 ± 5 mm length, 13.0 ± 0.3 mm width and about 0.18 mm thickness to prepare a test piece. In the meanwhile, *yuzen* paper which was not dipped in any of coating solutions was cut in the same size to prepare a "blank" test piece. Each of those test pieces was subjected to a pretreatment by allowing to stand for 48 hours at the temperature of 23 ± 2°C and the humidity of not higher than 50 ± 5%.

Non-ventilated chamber, enclosure, hood for laboratory, device where methanol of an industrial grade (the lowest purity: 98%) is supplied to a burner of 100 ± 10 mm length and 9.5 ± 0.3 mm inner diameter together with a regulator and a flow meter, clock device (precision: 1 second), manometer having a precision to an extent of 0.01 mm and ring stand having a clamp, etc. for supporting the test piece were prepared and, in a horizontal firing test (according to 94HB of the UL standard), lines were formed at the positions of 25 mm and 100 mm from the firing end of the each of the prepared test pieces.

After that, a 20-mesh wire net in a size of 125 mm × 125 mm was placed at the predetermined height of the ring stand making the surface horizontal and another end of firing ends in the longitudinal direction of the test piece was fixed by a clamp at the height position with a predetermined interval from the upper end of the wire net. The burner was ignited at the position which was far from the test piece, a gas flow, etc. were adjusted so that no yellow flame was formed and the height of the flame became 20 ± 1 mm and the flame of the burner was applied for 30 seconds

under such a condition that the flame of the burner covered the position of 6 ± 1 mm from one end of the test piece.

When burning of the test piece arrived at the 25-mm line within 30 seconds, the burner was kept away therefrom and, when the burning still continued, the burning time in the horizontal direction from the 25-mm line to the 100-mm line of the test piece was measured for three times.

When the flame retarding property was evaluated as above, the coated material manufactured by the use of the coating solution of the present application showed better result in the horizontal firing test as compared with the coated material manufactured by the use of the comparative coating solution. Among the measured results, that (in detail) of the horizontal firing test for the coated material manufactured by the use of the coating solution 5 of the present application is as shown in Table 4. In the measurements of each test piece in Table 4, "Time by seconds Until Arriving at 100 mm" means the time from the flame was contacted until it arrived at the 100-mm line (measuring time for three times from the first to the third runs) and "Burning Rate" is the rate (mm/minute) calculated from the mean value of the above three measuring times. Incidentally, when the flame went out until arriving at the 100-mm line, the position was calculated by means of a proportional allotment from the 100 mm.

As shown in Table 4, the result of the horizontal firing test was that the "time by seconds until 100 mm" was 20, 21 and 20 seconds for the "blank" test piece (the flame went out at 73 mm in that case), 38, 40 and 37 seconds for the "7.5 $g/m^2$" test piece (the flame went out at 72 mm in that case) and 56, 54 and 50 seconds for the "15 $g/m^2$" test piece (the flame went out at 72 mm in that case) at measurement for three times. The "burning rate" was 215.8 mm/minute for the "blank" test piece, 112.8 mm/minute for the "7.5 $g/m^2$" test piece and 81.1 mm/minute for the "15 $g/m^2$" test piece.

As mentioned above, the "7.5 $g/m^2$" test piece needed 1.5-fold or more time for burning to an extent of the 100-mm position as compared with the "blank" test piece and, in the case of the "15 $g/m^2$" test piece, 2-fold or more time was needed. Thus, the "burning rate" of the coated material manufactured by the invention of the present application showed such a very good evaluating result that, in the case of the "7.5 $g/m^2$" test piece, the rate was not more than 3/5 of the "blank" test piece and, in the case of the "15 $g/m^2$" test piece, the rate was not more than 2/5 of the "blank" test piece.

(b) Vertical Firing Test.

In the vertical firing test (in accordance with the UL Standard 94V-0), the test pieces used in the above (a) were used. First, a "7.5 $g/m^2$" test piece applied with a noncombustible agent and a "15 $g/m^2$" test piece applied with a noncombustible agent were prepared and an upper end of each of them was fixed by a clamp of the above-mentioned ring stand where the longitudinal direction of the test piece was made vertical. A burner was adjusted so as to make the flame height 20 ± 1 mm and then placed at the position where the upper end of the flame was 10 mm below the center of the edge of the lower end of the test piece and the flame was applied for 10 seconds. After that, the burner was kept away at least 150 mm from the test piece and the first test for the afterflaming time was carried out. When the afterflame ended, the burner was placed again at the position 10 mm below the center of the edge of the lower end, the flame was applied for 10 seconds and the burner was kept away at least 150 mm from the test piece whereupon the second test for the afterflaming time was measured and, at the same time, the aftersmoking time at that time was measured as well.

In the coated material manufactured by the use of the coating solution of the present invention, the afterflaming time in both the first and the second runs was not longer than 10 seconds, the sum of the afterflaming time for the first and the second runs was not longer than 50 seconds and the sum of the afterflaming time for the second run and the aftersmoking time was not longer than 30 seconds. Thus the better result was obtained as compared with the coated material manufactured by the use of the comparative coating solution.

(5) Result of Evaluation.

It is noted from Table 1 where a coated layer was formed by the compound of the formula 1 that the said compound is a very excellent component for giving various properties such as light transmitting property, water repelling property, mechanical strength and flame retarding property to paper which is a fiber material. It is also noted that, when the compound of the formula 2 or 3 is added to the coating solution in addition to the compound of the formula 1, the above-mentioned various properties were further improved as compared with the coating solution containing the compound of the formula 1 only (coating solutions of the present application 4, 5, 9, 10 and 14-16).

From the comparison of Table 1 with Table 2 and also from Table 3, it is noted that the coated material manufactured by the invention of the present invention is superior to the conventionally known coated materials. Incidentally, in the conventional coating solution, there is no improvement in various properties such as light transmitting property, water repelling property, mechanical strength and flame retarding property even when the compound of the formula 2 or 3 is added thereto unlike the coating solution of the invention of the present application. It is further noted that the

monomer of the compound of the formula 1 is unable to result in the effect which is achieved by the invention of the present application.

From Table 4, it is noted that the coated materials manufactured by the invention of the present application have an excellent resistance to heat and an excellent flame retarding property.

The invention of the present application is that a fiber material is coated with a condensate where, among four substituents of silicon atom as shown in the formula 1, one is substituted with a substituent $R_4$ which is not hydrolyzable and is not participated in a polycondensation of the compounds whereupon there is manufactured a coated material having appropriate strength, good light transmitting property, good water repelling property and softness and, further resistance to abrasion and flame retarding property (resistance to heat).

Therefore, in accordance with the invention of the present application, it is now possible, as will be apparent from the description of the Examples, to provide a coated material where the property of softness of fiber material available at hand such as Japanese paper, western paper and cloth is well utilized and, further, the above-mentioned various characteristics are given thereto. There is further advantage that such various characteristics given to those coated materials can be adjusted relatively easily by the persons who carry out the operation by appropriately selecting and adjusting, for example, the selection and the amount of the organometallic compound catalyst used as a catalyst, the selection and the amount of the compound(s) of the formula 2 and/or the formula 3 and the applying amount of the coating solution.

In the invention of the present application, a coated material is manufactured by applying a coating solution. Therefore, unlike the conventionally used materials such as paraffin paper which have high light transmitting property and excellent water repelling property but have been available only by means of production in factories, there is an advantage that the material which is present at hand and available easily such as a common paper material can be given with strength, light transmitting property, water repelling property, flame retarding property and resistance to abrasion together with utilizing the softness inherent thereto.

In addition, as compared with a rayon *shoji* paper or the like which has been used as a *shoji* paper in *shoji* houses, hotels, inns, etc. due to its toughness, the coated material manufactured by the invention of the present application has advantage that it hardly generates static electricity whereby dust is hardly attached thereto, that it has more water repelling property than a rayon *shoji* paper whereby its cleaning by wet cloth or the like is possible and that, even when water is absorbed therein as a result of washing, it does not detach from the adhered part.

Thus, unlike the special *shoji* paper represented by a rayon *shoji* paper, the coated material manufactured from a common *shoji* paper according to the invention of the present application does not use chemical substances such as rayon, acrylate and vinyl chloride and, therefore, an advantage that static electricity is not generated and dust is hardly attached can be achieved. In the conventional special *shoji* paper, it darkens by adsorption of the dust around that during the use for a long term and is to be replaced by a new one with some intervals while, in the case of the *shoji* paper according to the coated material manufactured by the invention of the present application, it does not darken even when used for a long term and the interval for replacement can be made significantly longer.

Further, when the coated material manufactured by the invention of the present application is compared with that which is manufactured by the conventional sol-gel solution, there is no need of using a silane coupling agent and, therefore, the reaction for the formation of the coated layer does not become non-uniform whereby there is an advantage that the strength of the coated layer does not lower. Still further, since synthesis of the compound of the formula 1, etc. is easy, there is another advantage that, as compared with the case of the use of the conventional compounded organic/inorganic materials, it is possible to provide a coated material at far lower cost.

In a comparison with the product mentioned in the Japanese Patent No. 3020934, the coating solution of the invention of the present application contains neither boron ion nor halogen ion and, therefore, there is an advantage that neutralization of the paper is not resulted and a long-term preservation of the coating solution and the coated material is possible. Further, there is an additional advantage that, since the coated layer of the coated material manufactured by the invention of the present application is not formed only by a network of a hard siloxane bond, it has both certain hardness and softness and shows a high mechanical strength. Moreover, because of nonuse of boron ion and halogen ion in the coating solution and the manufacturing method according to the invention of the present application, there is a further advantage that disposal of the solution after use is easier than the case where the above ions are used.

The coated material manufactured using, for example, a colored paper as a fiber material according to the present invention may, for example, be used as it is or, after sticking on a common transparent glass, used as a window glass like stained glass or as a shade, etc. for a desk lamp resulting in a good beautifulness. Especially when it is made into a shade, etc. utilizing the Japanese paper which is able to express the traditional beautifulness of paper from ancient times in Japan, it is possible to provide a material which has beautifulness and characteristics inherent to the paper itself and also shows a high water repelling property and a high water-resisting/waterproofing property.

In addition, the coated material manufactured by the invention of the present application has the above-mentioned various characteristics as compared with the conventional paper and, therefore, various products using that are

durable even for the use during a long term. For example, when a coated material is manufactured from *shoji* paper, its thickness is kept not more than about 1 mm and coated layers are formed on both sides of the paper whereby it is possible to provide a very economical *shoji* paper which is tough and hard to burn, shows an excellent water repelling property and is able to be repeatedly used by washing if stained. Although a coated material manufactured from *shoji* paper is better than the conventional ones, it may be damaged by a shock, etc. However, unlike a simple glass, its fragments are not scattered and, therefore, it has a high safety and contributes to the demand for barrier-free houses as a result of an aging society in recent years.

Since the coated material manufactured by the invention of the present application is covered by a very stable coated layer, there is an advantage that evaporation of chemical substances (which are used in constructing the houses) from inside which has been received public attention in recent years is little. Accordingly, when the said coated material is used for the product which is used in the house such as wall paper and *shoji* paper, it is possible to prevent or reduce the allergy occurring in human body.

Further, in accordance with the manufacturing method of the invention of the present application, not only the degree of the various properties given to the coated layer but also the thickness of the said coated layer can be freely adjusted and, therefore, when it is used, for example, for a product which is used in outdoor being exposed to weather or for interior decoration such as wall paper, it is possible to manufacture and provide an optimum coated material by adjusting the type and the amount of each compound upon necessity.

An object of the present invention is to provide a method for the manufacture of a coated material having an appropriate strength, a good light transmitting property and a good water repelling property by applying to fiber material ready at hand such as Japanese paper, western paper, cloth, etc. in view of a property of a fiber material such as softness and also to provide a coating solution used for the coated material.

The above object can be achieved by a method for the manufacture of a coated material in which a coating solution of a silane type is applied to a fiber material and hardened/solidified by the action of a hydrolyzable organometallic compound catalyst to give a coated paper to which an appropriate strength and good light transmitting property and water repelling property are given and also by a coating solution used therefor.

## Claims

1. A coated material obtainable by forming a surface by applying a coating solution of a silane type mainly comprising a compound represented by the formula (1) to a fiber material, said fiber material being hardened/solidified by the action of a catalyst, which is a hydrolyzable organometallic compound catalyst;

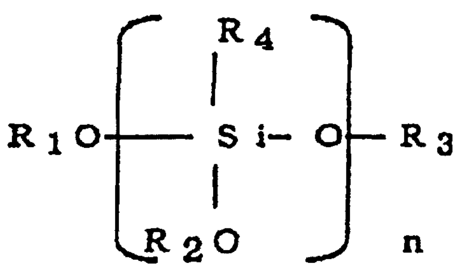

(1)

(in the formula (1) , $R_1$, $R_2$, $R_3$ and $R_4$ may be same or different and each is hydrogen or an alkyl group having 1 to 4 carbon(s) with n ranging from 2 to 10).

2. The coated material according to claim 1, wherein the surface is formed where, prior to the application of the coating solution, said fiber material is dipped in alcohol and dried and ultraviolet ray is further irradiated thereto.

3. The coated material according to claim 1 or 2, wherein said hydrolyzable organometallic compound is one or more organometallic compound(s) selected from the group consisting of titanium, zirconium, aluminum and tin.

4. The coated material according to claim 1, wherein the coating solution further contains a compound represented by the formula (2) having three hydrolyzable substituents and one unhydrolyzable substituent

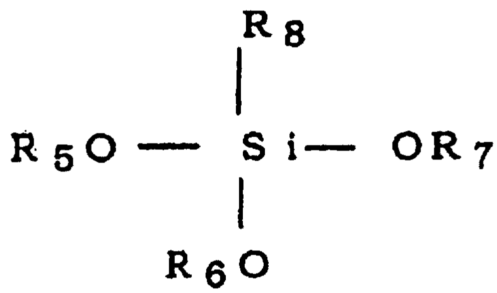

(2)

(in the formula (2), $R_5$, $R_6$ and $R_7$ may be same or different and each is a monomer comprising hydrogen, an alkyl group or an alkenyl group; a bond of $R_5O$, $R_6O$ and $R_7O$ to Si is an oligomer comprising a siloxane bond; and $R_8$ is an alkenyl group or a phenyl group which may contain an epoxy group or a glycidyl group in a molecule).

**5.** The coated material according to claim 1, wherein the coating solution further contains a compound represented by the formula (3) having two hydrolyzable substituents and two unhydrolyzable substituents

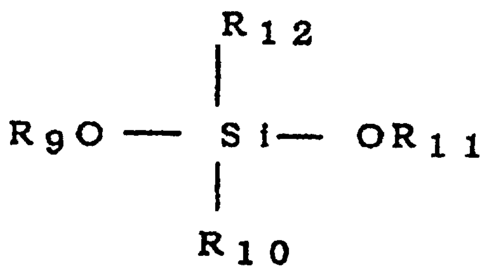

(3)

(in the formula (3), $R_9$ and $R_{11}$ may be same or different and each is a monomer comprising hydrogen, an alkyl group or an alkenyl group; a bond of $R_9O$ and $R_{11}O$ to Si is an oligomer comprising a siloxane bond; and $R_{10}$ and $R_{12}$ each is an alkyl group, an alkenyl group or a phenyl group which may contain an epoxy group or a glycidyl group in a molecule).

**6.** The coated material according to claim 1, wherein the coating solution further contains a compound represented by the formula (2) and a compound represented by the formula (3)

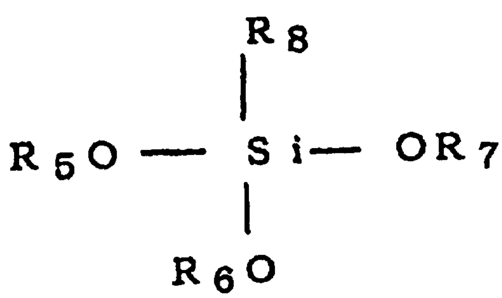

(2)

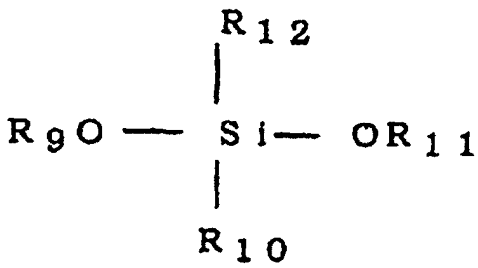

(3)

(in the formula (2) $R_5$, $R_6$ and $R_7$ may be same or different and each is a monomer comprising hydrogen, an alkyl group or an alkenyl group; a bond of $R_5O$, $R_6O$ and $R_7O$ to Si is an oligomer comprising a siloxane bond; and $R_8$ is an alkyl group, an alkenyl group or a phenyl group which may contain an epoxy group or a glycidyl group in a molecule; and in the formula (3), $R_9$ and $R_{11}$ may be same or different and each is a monomer comprising hydrogen, an alkyl group or an alkenyl group; a bond of $R_9O$ and $R_{11}O$ to Si is an oligomer comprising a siloxane bond; and $R_{10}$ and $R_{12}$ each is an alkyl group, an alkenyl group or a phenyl group which may contain an epoxy group or a glycidyl group in a molecule).

**7.** A coating solution of a silane type for giving an appropriate strength and good light transmitting property and water repelling properties to a fiber material where said coating solution contains as a main component a compound represented by formula (1) as defined in claim 1 and a hydrolyzable organometallic compound catalyst for hardening/solidifying thereof.

**8.** The coating solution according to claim 7, wherein the hydrolyzable organometallic compound is one or more organometallic compound(s) selected from the group consisting of titanium, zirconium, aluminum and tin.

**9.** The coating solution according to claim 7, wherein the coating solution of a silane type contains a compound represented by the formula (2) having three hydrolyzable substituents and one unhydrolyzable substituent in addition to the above main component.

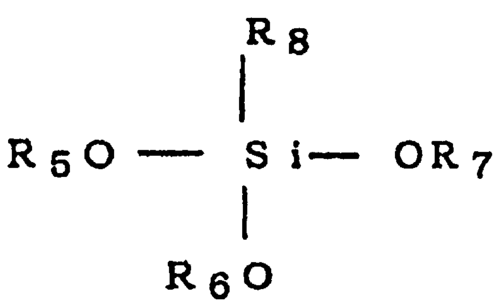

(2)

(in the formula (2), $R_5$, $R_6$ and $R_7$ may be same or different and each is a monomer comprising hydrogen, an alkyl group or an alkenyl group; a bond of $R_5O$, $R_6O$ and $R_7O$ to Si is an oligomer comprising a siloxane bond; and $R_8$ is an alkenyl group or a phenyl group which may contain an epoxy group or a glycidyl group in a molecule).

**10.** The coating solution according to claim 7, wherein the coating solution of a silane type contains a compound represented by the formula (3) having two hydrolyzable substituents and two unhydrolyzable substituents in addition to the above main component.

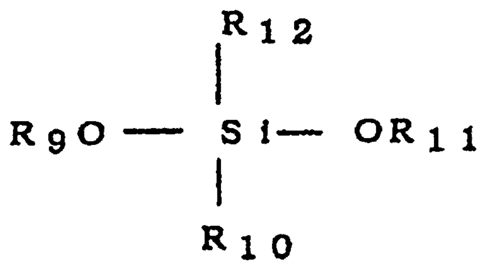

(3)

(in the formula (3), $R_9$ and $R_{11}$ may be same or different and each is a monomer comprising hydrogen, an alkyl group or an alkenyl group; a bond of $R_9O$ and $R_{11}O$ to Si is an oligomer comprising a siloxane bond; and $R_{10}$ and $R_{12}$ each is an alkyl group, an alkenyl group or a phenyl group which may contain an epoxy group or a glycidyl group in a molecule).

**11.** The coating solution according to claim 7, wherein the coating solution of a silane type contains a compound represented by the formula (2) and a compound represented by the formula (3) in addition to the above main component.

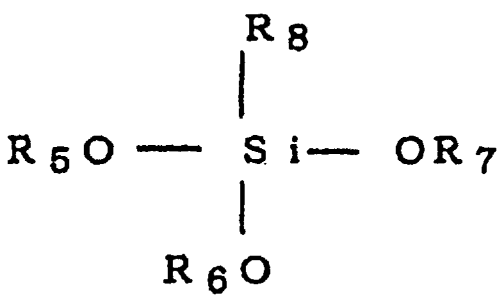

(2)

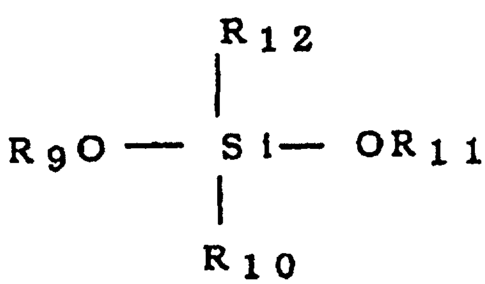

(3)

(in the formula (2), $R_5$, $R_6$ and $R_7$ may be same or different and each is a monomer comprising hydrogen, an alkyl group or an alkenyl group; a bond of $R_5O$, $R_6O$ and $R_7O$ to Si is an oligomer comprising a siloxane bond; and $R_8$ is an alkyl group, an alkenyl group or a phenyl group which may contain an epoxy group or a glycidyl group in a molecule; and in the formula (3) $R_9$ and $R_{11}$ may be same or different and each is a monomer comprising hydrogen, an alkyl group or an alkenyl group; a bond of $R_9O$ and $R_{11}O$ to Si is an oligomer comprising a siloxane bond; and $R_{10}$ and $R_{12}$ each is an alkyl group, an alkenyl group or a phenyl group which may contain an epoxy group or a glycidyl group in a molecule).

## Patentansprüche

**1.** Beschichtetes Material erhältlich durch Bildung einer Oberfläche, indem eine Beschichtungslösung vom Silantyp, die hauptsächlich eine Verbindung aufweist, die durch die Formel (1) wiedergegeben wird, auf das Fasermaterial aufgebracht wird, das durch die Wirkung eines Katalysators, der eine hydrolysierbare organometallische Katalysatorverbindung ist, aushärtet/verfestigt wird;

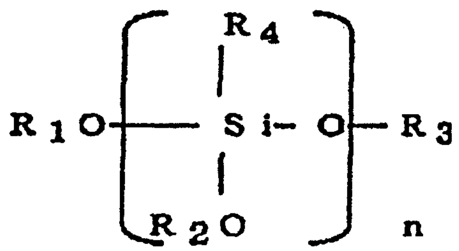

(1)

wobei (in der Formel (1), können $R_1$, $R_2$, $R_3$ und $R_4$ gleich oder verschieden sein und ein Wasserstoffatom oder eine Alkylgruppe sein, die 1 - 4 Kohlenstoffatome aufweist, wobei n von 2 bis 10 reicht).

2. Beschichtetes Material nach Anspruch 1, wobei die Oberfläche dort gebildet wird, vor dem Aufbringen der Beschichtungslösung, dieses Fasermaterial in Alkohol getaucht, getrocknet und mit ultravioletten Strahlen weiter bestrahlt wird.

3. Beschichtetes Material nach Anspruch 1 oder 2, wobei die hydrolysierbare organometallische Verbindung eine oder mehrere organometallische Verbindung(en) ist, die aus der Gruppe ausgewählt wird, die aus Titan, Zirkon, Aluminium und Zinn besteht.

4. Beschichtetes Material nach Anspruch 1, wobei die Beschichtungslösung weiter eine Verbindung enthält, die durch die Formel (2) wiedergegeben wird, die drei hydrolysierbare Substituenten und einen nicht hydrolysierbaren Substituenten enthält

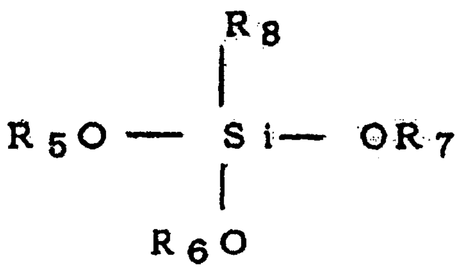

(2)

wobei (in der Formel (2) können $R_5$, $R_6$ und $R_7$ gleich oder verschieden sein und jede ein Monomer ist, das ein Wasserstoffatom, eine Alkylgruppe oder eine Alkenylgruppe aufweist; eine Bindung von $R_5O$, $R_6O$ und $R_7O$ an Si ist ein Oligomer, das eine Siloxanbindung aufweist; und $R_8$ ist eine Alkenylgruppe oder eine Phenylgruppe, die eine Epoxygruppe oder eine Gycidylgruppe in einem Molekül aufweisen kann).

5. Beschichtetes Material nach Anspruch 1, wobei die Beschichtungslösung weiter eine Verbindung enthält, die durch die Formel (3) wiedergegeben wird, die zwei hydrolysierbare Substituenten und zwei nicht hydrolysierbare Substituenten enthält,

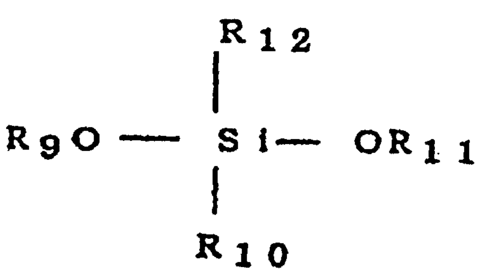

(3)

wobei (in der Formel (3) können $R_9$ und $R_{11}$ gleich oder verschieden sein und jede ein Monomer ist, das ein Wasserstoffatom, eine Alkylgruppe oder eine Alkenylgruppe aufweist; eine Bindung von $R_9O$ und $R_{11}O$ an Si ist

ein Oligomer, das eine Siloxanbindung enthält; und $R_{10}$ und $R_{12}$ ist jede eine Alkylgruppe, eine Alkenylgruppe oder eine Phenylgruppe, die eine Epoxygruppe oder eine Gycidylgruppe in einem Molekül enthält).

**6.** Beschichtetes Material nach Anspruch 1, wobei die Beschichtungslösung weiter eine Verbindung enthält, die durch die Formel (2) wiedergegeben wird und die Verbindung, die durch die Formel (3) wiedergegeben wird

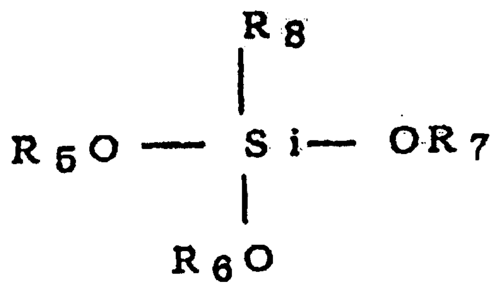

(2)

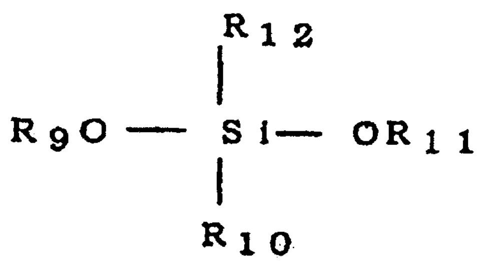

(3)

wobei (in der Formel (2) können $R_5$, $R_6$ und $R_7$ gleich oder verschieden sein und jede ein Monomer ist, das ein Wasserstoffatom, eine Alkylgruppe oder eine Alkenylgruppe aufweist; eine Bindung von $R_5O$, $R_6O$ und $R_7O$ an Si ist ein Oligomer, das eine Siloxanbindung enthält; und $R_8$ ist eine Alkylgruppe, eine Alkenylgruppe oder eine Phenylgruppe, die eine Epoxygruppe oder eine Glycidylgruppe in einem Molekül aufweisen kann; und in der Formel (3) können $R_9$ und $R_{11}$ gleich oder verschieden sein und jede ein Monomer ist, das ein Wasserstoffatom, eine Alkylgruppe oder eine Alkenylgruppe aufweist; eine Bindung von $R_9O$ und $R_{11}O$ an Si ist ein Oligomer, das eine Siloxanbindung enthält; und $R_{10}$ und $R_{12}$ jede eine Alkylgruppe, eine Alkenylgruppe oder eine Phenylgruppe aufweist, die eine Epoxygruppe oder Gycidylgruppe in einem Molekül enthält).

**7.** Beschichtungslösung vom Silantyp zum Verleihen einer geeigneten Stärke und guten Eigenschaft der Lichtdurchlässigkeit und Eigenschaften des Wasserabweisens auf ein Fasermaterial, wo die Beschichtungslösung als eine Hauptkomponente eine Verbindung, die durch die Formel (1), wie in Anspruch 1 definiert, wiedergegeben wird und eine hydrolysierbare organometallische Katalysatorverbindung zum Härten/Verfestigen enthält.

**8.** Beschichtungslösung nach Anspruch 7, wobei die hydrolysierbare organometallische Verbindung eine oder mehrere organometallische Verbindung(en) ist, die aus der Gruppe ausgewählt wird, die aus Titan, Zirkon, Aluminium und Zinn besteht.

**9.** Beschichtungslösung nach Anspruch 7, wobei die Beschichtungslösung vom Silantyp eine Verbindung enthält, die durch die Formel (2) wiedergegeben wird, die drei hydrolysierbare Substituenten und einen nicht hydrolysierbaren Substituenten zusätzlich zu der obigen Hauptverbindung enthält

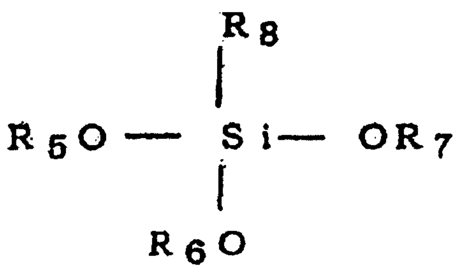

(2)

wobei (in der Formel (2) können $R_5$, $R_6$ und $R_7$ gleich oder verschieden sein und jede ein Monomer ist, das ein Wasserstoffatom, eine Alkylgruppe oder eine Alkenylgruppe aufweist; eine Bindung von $R_5O$, $R_6O$ und $R_7O$ an Si ist ein Oligomer, das eine Siloxanbindung aufweist; und $R_8$ ist eine Alkenylgruppe oder eine Phenylgruppe, die eine Epoxygruppe oder eine Glycidylgruppe in einem Molekül aufweisen kann.

**10.** Beschichtungslösung nach Anspruch 7, wobei die Beschichtungslösung vom Silantyp eine Verbindung enthält, die durch die Formel (3) wiedergegeben wird, die zwei hydrolysierbare Substituenten und zwei nicht hydrolysierbare Substituenten zusätzlich zu der obigen Hauptkomponente enthält,

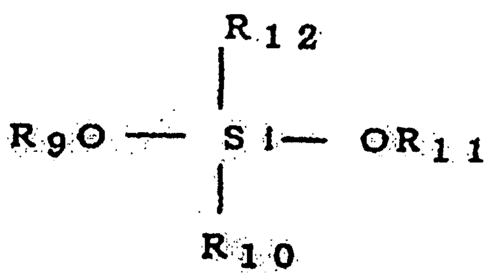

(3)

wobei (in der Formel (3) können $R_9$ und $R_{11}$ gleich oder verschieden sein und jede ein Monomer ist, das ein Wasserstoffatom, eine Alkylgruppe oder eine Alkenylgruppe aufweist; eine Bindung von $R_9O$ und $R_{11}O$ an Si ist ein Oligomer, das eine Siloxanbindung enthält; und $R_{10}$ und $R_{12}$ ist jeder eine Alkylgruppe, eine Alkenylgruppe oder eine Phenylgruppe, die eine Epoxygruppe oder Gycidylgruppe in einem Molekül enthalten kann).

**11.** Beschichtungslösung nach Anspruch 7, wobei die Beschichtungslösung vom Silantyp eine Verbindung, die durch die Formel (2) wiedergegeben wird und die Verbindung, die durch die Formel (3) wiedergegeben wird, zusätzlich zu der obigen Hauptkomponente enthält,

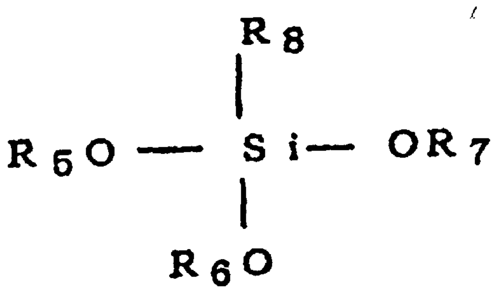

(2)

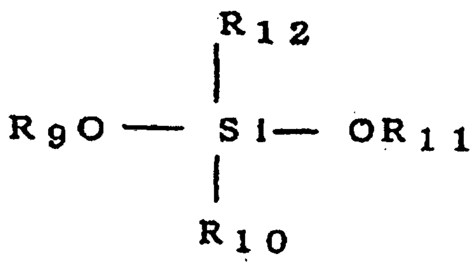

(3)

wobei (in der Formel (2) können $R_5$, $R_6$ und $R_7$ gleich oder verschieden sein und jede ein Monomer ist, das ein Wasserstoffatom, eine Alkylgruppe oder eine Alkenylgruppe aufweist; eine Bindung von $R_5O$, $R_6O$ und $R_7O$ an Si ist ein Oligomer, das eine Siloxanbindung enthält; und $R_8$ ist eine Alkylgruppe, eine Alkenylgruppe oder eine Phenylgruppe, die eine Epoxygruppe oder eine Glycidylgruppe in einem Molekül aufweisen kann; und in der Formel (3) können $R_9$ und $R_{11}$ gleich oder verschieden sein und jede ein Monomer ist, das ein Wasserstoffatom, eine Alkylgruppe oder eine Alkenylgruppe aufweist; eine Bindung von $R_9O$ und $R_{11}O$ an Si ist ein Oligomer, das eine Siloxanbindung enthält; und $R_{10}$ und $R_{12}$ ist jeder eine Alkylgruppe, eine Alkenylgruppe oder eine Phenylgruppe, die eine Epoxygruppe oder Gycidylgruppe in einem Molekül enthalten kann).

**Revendications**

**1.** Matière enduite pouvant être obtenue par la formation d'une surface en appliquant une solution d'enduction de type silane comprenant principalement un composé représenté par la formule (1) à une matière fibreuse, ladite matière fibreuse étant durcie/solidifiée par l'action d'un catalyseur qui est un catalyseur qui est composé organométallique hydrolysable ;

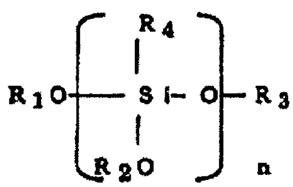

(1)

(dans la formule (1), $R_1$, $R_2$, $R_3$ et $R_4$ peuvent être identiques ou différents et chacun représente un atome d'hydrogène ou un groupe alkyle ayant de 1 à 4 atomes de carbone, avec n compris entre 2 et 10).

**2.** Matière enduite selon la revendication 1, dans laquelle la surface est formée à l'endroit où, avant l'application de la solution d'enduction, ladite matière fibreuse est trempée dans de l'alcool et séchée et de plus, elle est irradiée par des rayons ultraviolets.

**3.** Matière enduite selon la revendication 1 ou 2, dans laquelle ledit composé organométallique hydrolysable est un ou plusieurs composés organométalliques choisis dans le groupe comprenant le titane, le zirconium, l'aluminium et l'étain.

**4.** Matière enduite selon la revendication 1, dans laquelle la solution d'enduction contient en outre un composé représenté par la formule (2) ayant trois substituants hydrolysables et un substituant non hydrolysable

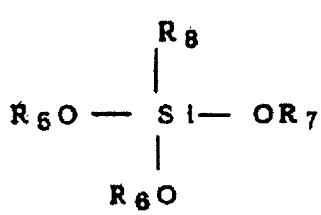

(2)

(dans la formule (2), $R_5$, $R_6$ et $R_7$ peuvent être identiques ou différents et chacun représente un monomère comprenant l'hydrogène, un groupe alkyle ou un groupe alcényle ; une liaison de $R_5O$, de $R_6O$ et de $R_7O$ au silicium représente un oligomère comprenant une liaison siloxane ; et $R_8$ représente un groupe alcényle ou un groupe phényle qui peut contenir un groupe époxy ou un groupe glycidyle dans une molécule).

5. Matière enduite selon la revendication 1, dans laquelle la solution d'enduction contient en outre un composé représenté par la formule (3) ayant deux substituants hydrolysables et deux substituants non hydrolysables

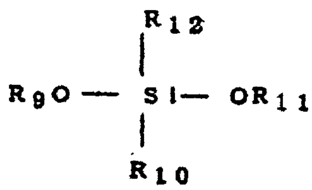

(3)

(dans la formule (3), $R_9$ et $R_{11}$ peuvent être identiques ou différents et chacun rerprésente un monomère comprenant l'hydrogène, un groupe alkyle ou un groupe alcényle ; une liaison de $R_9O$ et de $R_{11}O$ au silicium représente un oligomère comprenant une liaison siloxane ; et $R_{10}$ et $R_{12}$ représentent chacun un groupe alkyle, un groupe alcényle ou un groupe phényle qui peut contenir un groupe époxy ou un groupe glycidyle dans une molécule).

6. Matière enduite selon la revendication 1, dans laquelle la solution d'enduction contient en outre un composé représenté par la formule (2) et un composé représenté par la formule (3)

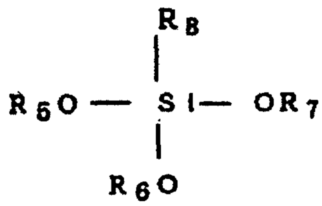

(2)

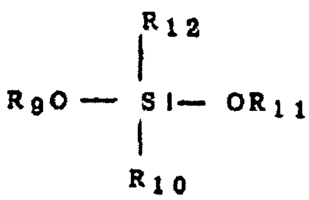

(3)

(dans la formule (2), $R_5$, $R_6$ et $R_7$ peuvent être identiques ou différents et chacun représente un monomère comprenant l'hydrogène, un groupe alkyle ou un groupe alcényle ; une liaison de $R_5O$, de $R_6O$ et de $R_7O$ au silicium représente un oligomère comprenant une liaison siloxane ; et $R_8$ représente un groupe alkyle, un groupe alcényle ou un groupe phényle qui peut contenir un groupe époxy ou un groupe glycidyle dans une molécule ; et dans la formule (3), $R_9$ et $R_{11}$ peuvent être identiques ou différents et chacun représente un monomère comprenant l'hydrogène, un groupe alkyle ou un groupe alcényle ; une liaison de $R_9O$ et de $R_{11}O$ au silicium représente un oligomère comprenant une liaison siloxane ; et $R_{10}$ et $R_{12}$ représentent chacun un groupe alkyle, un groupe alcényle ou un groupe phényle qui peut contenir un groupe époxy ou un groupe glycidyle dans une molécule).

7. Solution d'enduction de type silane pour donner une résistance appropriée et une bonne propriété de transmission de la lumière et des propriétés hydrofuges à une matière fibreuse, dans laquelle ladite solution d'enduction contient en tant que composant principal, un composé représenté par la formule (1) définie comme dans la revendication 1, et un catalyseur qui est composé organométallique hydrolysable pour son durcissement/ solidification.

8. Solution d'enduction selon la revendication 7, dans laquelle le composé organométallique hydrolysable est un ou plusieurs composés organométalliques choisis dans le groupe comprenant le titane, le zirconium, l'aluminium et l'étain.

**9.** Solution d'enduction selon la revendication 7, dans laquelle la solution d'enduction de type silane contient un composé représenté par la formule (2) ayant trois substituants hydrolysables et un substituant non hydrolysable en plus du composant principal ci-dessus

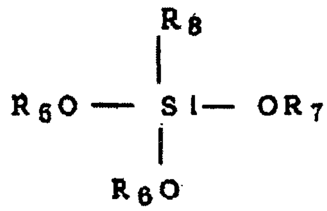

(2)

(dans la formule (2), $R_5$, $R_6$ et $R_7$ peuvent être identiques ou différents et chacun représente un monomère comprenant l'hydrogène, un groupe alkyle ou un groupe alcényle ; une liaison de $R_5O$, de $R_6O$ et de $R_7O$ au silicium représente un oligomère comprenant une liaison siloxane ; et $R_8$ représente un groupe alcényle ou un groupe phényle qui peut contenir un groupe époxy ou un groupe glycidyle dans une molécule).

**10.** Solution d'enduction selon la revendication 7, dans laquelle la solution d'enduction de type silane contient un composé représenté par la formule (3) ayant deux substituants hydrolysables et deux substituants non hydrolysables en plus du composant principal ci-dessus

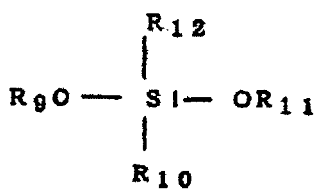

(3)

(dans la formule (3), $R_9$ et $R_{11}$ peuvent être identiques ou différents et chacun représente un monomère comprenant l'hydrogène, un groupe alkyle ou un groupe alcényle ; une liaison de $R_9O$ et de $R_{11}O$ au silicium représente un oligomère comprenant une liaison siloxane ; et $R_{10}$ et $R_{12}$ représentent chacun un groupe alkyle, un groupe alcényle ou un groupe phényle qui peut contenir un groupe époxy ou un groupe glycidyle dans une molécule).

**11.** Solution d'enduction selon la revendication 7, dans laquelle la solution d'enduction de type silane contient un composé représenté par la formule (2) et un composé représenté par la formule (3) en plus du composant principal ci-dessus

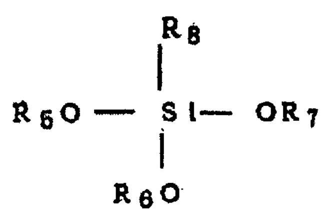

(2)

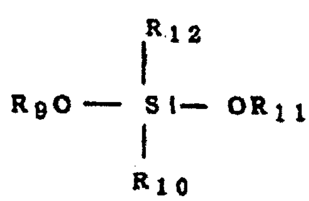

(3)

(dans la formule (2), $R_5$, $R_6$ et $R_7$ peuvent être identiques ou différents et chacun représente un monomère comprenant l'hydrogène, un groupe alkyle ou un groupe alcényle ; une liaison de $R_5O$, de $R_6O$ et de $R_7O$ au silicium représente un oligomère comprenant une liaison siloxane ; et $R_8$ représente un groupe alkyle, un groupe alcényle

ou un groupe phényle qui peut contenir un groupe époxy ou un groupe glycidyle dans une molécule ; et dans la formule (3), $R_9$ et $R_{11}$ peuvent être identiques ou différents et chacun représente un monomère comprenant l'hydrogène, un groupe alkyle ou un groupe alcényle ; une liaison de $R_9O$ et de $R_{11}O$ au silicium représente un oligomère comprenant une liaison siloxane ; et $R_{10}$ et $R_{12}$ représentent chacun un groupe alkyle, un groupe alcényle ou un groupe phényle qui peut contenir un groupe époxy ou un groupe glycidyle dans une molécule).

Fig. 1